# EUROPEAN PATENT SPECIFICATION

(11) **EP 1 729 599 B1**
(45) Date of publication and mention of the grant of the patent: **30.01.2008**
(21) Application number: 05727236.1
(22) Date of filing: 01.04.2005
(51) Int. Cl.: A23L 1/314, A23L 1/317, A23B 4/023

(54) **METHOD OF PRODUCTION OF MEAT PRODUCTS FROM ENTIRE MUSCULAR TISSUE, WITH DIRECT INCORPORATION OF OLIVE OIL**
VERFAHREN ZUR HERSTELLUNG VON FLEISCHPRODUKTEN AUS GANZEN MUSKELN MIT DIREKTER ZUFÜGUNG VON OLIVENÖL
PROCEDE DE PRODUCTION DE PRODUITS DE VIANDE A PARTIR DE TISSU MUSCULAIRE ENTIER AVEC INCORPORATION DIRECTE D'HUILE D'OLIVE

(30) Priority: 01.04.2004 GR 2004100113
(43) Date of publication of application: 13.12.2006
(73) Proprietor: " Creta Farm Anonimos Viomichaniki & Emporiki Etaireia", 741 00 Rethymnon (GR)
(72) Inventor: DOMAZAKIS, Emmanouil, GR-741 00 Rethymnon (GR)
(74) Representative: Betten & Resch
(86) International application number: PCT/GR2005/000009
(87) International publication number: WO 2005/094617

(56) References cited:
- EP-A- 0 404 214
- WO-A-20/04082403
- DE-U1- 20 011 390
- US-A- 5 238 701
- US-A1- 2003 049 364
- MUGUERZA E, FISTA G, ANSORENA D, ASTIASARAN I, BLOUKAS JG: "Effect of fat level and partial replacement of pork backfat with olive oil on processing and quality caracteristics of fermented sausages" MEAT SCIENCE, vol. 61, 2002, pages 397-404, XP002329217
- BLOUKAS J G ET AL: "Effect of replacing pork backfat with olive oil on processing and quality characteristics of fermented sausages" MEAT SCIENCE, ELSEVIER SCIENCE, GB, vol. 45, no. 2, 1997, pages 133-144, XP002311510 ISSN: 0309-1740
- SEVERINI C ET AL: "Partial substitution of pork backfat with extra-virgin olive oil in 'salami' products: Effects on chemical, physical and sensorial quality" MEAT SCIENCE, ELSEVIER SCIENCE, GB, vol. 64, no. 3, July 2003 (2003-07), pages 323-331, XP002311512 ISSN: 0309-1740

## Description

The present invention concerns the production of meat products from entire muscular tissue, with main characteristics:
1. the use of olive oil
2. the use of known technical processes and the known properties of the meat during processing in order to achieve the maximum possible absorption of the olive oil, and
3. the implementation of the appropriate technological procedures and treatment which have been developed in order to:
   ■ Achieve a stable emulsion - meat paste of stable composition and structure, capable to be submitted in suitable thermal treatment, with the purpose of incorporating olive oil and the stable blending of that and afterwards the coagulation of proteins, in the basic system of said emulsion which consists of: muscle proteins/water/ olive oil.
   ■ Achieve the maximum possible maintenance of the organoleptic, physical and chemical, and nutritional characteristics & properties of the differentiating factor the olive oil.

Said products from entire muscular tissue (e.g. ham, turkey fillet, etc) constitute a compact mass from large items of meat that are distinguished by good consistency, tenderness and the fact that they can be cut into thin slices. For the preparation of the products, a quantity of brine (water, salt, seasonings, nitrates, etc) is injected into the muscle tissue of the meat followed by a mechanical tumbling aiming to the activation of the contractile muscle proteins, so that is the swelling and extraction of this, in order for that to come out on the surface of the items of meat, thus causing the binding between them after the heat or thermal treatment, as well as a tenderization of the meat.

The stability of these products depends, basically, on the extracted proteins of the meat during the mechanical tumbling, which retain the quantity of brine that is added to that and form, on the surface of the meat, an adhesive substance, which increases considerably the binding capacity of the meat pieces. The admixture of fat hinders considerably the Injection of various salts (e.g. nitrites) and the extraction of proteins as well due to the presence of a fat layer around the meat pieces, thus preventing the binding between them.

The incorporation of olive Oit in said products , since this is attempted with the use of conventional techniques, is associated with instability problems or with a destabilization tendency, concerning both, the unprocessed meat mass and also the thermal processed final product, which usually presents the phenomenon of oil separation

There are already known guaranteed techniques of indirect incorporation of vegetable oils. However, these techniques
■ include a preliminary heat treatment procedure of the oil at temperature levels of, at least, 100 °C, mixing with water and milk proteins, aiming at the creation of a stable emulsion, which formed in small cubes depending on the product are added to meat-based products, thus replacing completely the animal fat.

The previous procedure, which aims at the conversion from the liquid state of the oil to the solid state, using the milk protein for the creation of a stable emulsion, is a restrictive factor for the production of meat-based products such as:
■ cooked or dry-cured meat products from entire muscular (e.g. ham, chicken fillet, turkey fillet, etc)
■ production of products of superior quality where the use of auxiliary milk proteins is not allowed (e.g. ham cuit superieur, roulade superieur, etc)

Using olive oil (the role of which in the human nutrition is distinct between the seed oils and other vegetable oils, as well as internationally recognized for the beneficial characteristics of its individual natural compounds (reference is made to the fatty acids and their protective role in the low cholesterol, to the tocopherols and polyphenols and their role)), a mild processing must be adopted, to protect initial structure and the fatty acid composition as well.

The above method, as well as the more recent method for meat-based products with direct incorporation of olive oil, is limited to cooked products from fine cut pieces of meat. The applied technique and the behavior of the meat mass during the production procedure are different for the other groups of meat products (sausages, etc). Consequently, the extraction of the proteins of the meat, as well, and the creation of the protein lattice is differentiated during the modification of the procedure of preparation of the products.
Still in the previous methods becomes use of additives and processing aids (phosphates, milk proteins, vegetable proteins, etc), the use of which aims at the complementation or the substitution of the proteins of the meat Furthermore, the above auxiliary ingredients aim at higher water retention and the emulsification capacity of the meat. With the restriction of the use of said processing aids, there is not allowed the production of meat products of superior quality (e.g. superieur), where the use of the reported auxiliary materials is prohibited.

In WO-A-2004/082403, a preparation method for meat based products with direct incorporation of olive oil and addition of feta type cheese is disclosed. The method comprises mixing of fat-free meat with water, salt, preservatives and auxiliary salts, addition of olive oil and mixing, addition of feta type cheese and mixing, storage of the mixture with simultaneous vacuum application and pasteurisation and deep-freezing of the product.

In US Patent 5,238,701, a process for making delicatessen meat products using vegetable fats instead of the traditional animal fats is disclosed. A predetermined amount of vegetable oil is first heated to a temperature of at least 100° C, and a homogeneous mixture is made by incorporating milk proteins into the hot oil. The milk proteins are in an amount less than the oil. Then, boiling water is added to the mixture and the mixture is stirred to create a stabilizing emulsion.

In US A-2003/0049364, a method of production of a meat product containing olive oil is disclosed. The method comprises mixture of thin meat with water, salt, poli-phosphoric salts, preservatives, vegetable proteins, milk proteins and starch. Insertion of olive oil and continuation of mixture. The mixture is then incased with simultaneous application of vacuum and pasteurization and the product is freezed.

On one hand, the use of olive oil as an ingredient replacing the animal fat in meat products, is to be carried out under particularly protective conditions, so as to ensure the maximum possible transfer of its properties to the host product.

On the other hand, the incorporation process of the olive oil, must not affect the traditional production technique of meat products, taking systematically into consideration scientific data based on the attributes of proteins, fats and oils, and on their bounding properties as well.

It should be taken Into consideration that the stability of the "meat emulsions" is influenced significantly by:
■ the origin and the composition of the oil to be incorporated
■ the extraction level of the proteins of the meat for the creation of a solid protein lattice
■ The physical and chemical properties, such as
   - the profile of the fatty acids (type and degree of saturation)
   - the SFI (solid fat index)
   - the PUFA (polyunsaturated fatty acids), MUFA (monounsaturated fatty acids) / SFA (saturated fatty acids) ratio at the applied temperatures in the various phases of production.

It is evident that, from a technological point of view, the differences between pork fat and olive oil should be taken seriously into consideration in the preparation of a stable meat paste.

In the case of the olive oil, its characteristics (sensitive chemical properties) require incorporation under concrete conditions, that recommend:
- The creation of a maximum possible incorporation of the oil by means of mechanical processes (mixing, tumbling, homogenization of the participating compounds).
- Calculation of an ideal quantitative ratio between these compounds, in order to ensure the maximum possible absorption and stabilization of the oil in the emulsion, at the same time with the maximum possible absorption of added water (fat/ proteins/ water ratio).
- The preparation of a stable emulsion, which is established between the extracted meat proteins and the fatty phase of the added oil, applying mechanical processes (energy) and avoiding high temperatures, under selected vacuum and temperature conditions during the mixing phase and under an homogenization degree , thus obtaining the maximum possible dispersion and dimension of fat globules.

Finally, an important requirement is ensuring :
- the stability of the emulsion during the phases of the heat treatment, and the subsequent cooling of the product,
- the behavior of the product in slicing and packing under vacuum conditions, as well as
- shelf life stability under refrigeration.

The aim of the present invention is the production of meat-based products from entire muscular tissue, which is characterized by the cold incorporation of olive oil. This direct mixing of the olive oil does not alter, on one hand, the traditional form of the products and, on the other hand, it allows a production of superior quality products without the use of milk proteins or other processing aids.

This aim is achieved by means of:
- The admixture of the olive oil that must be carried out after the extraction of the proteins of the meat (mixing - tumbling - emulsification). At that specific moment, the proteins of the meat, especially the salt soluble proteins myosin and actin, have been extracted. The extracted proteins on the surface of the meat pieces are capable of creating a stable emulsion with the olive oil.
- the calculation of the percentage of added olive oil as a function and depending on the percentage of extracted meat protein and of the auxiliary ingredients that are eventually used in order to enhance the binding capacity of the meat paste. Thus, the percentage of the added olive oil depends on the quantity of the extracted proteins or that of the available auxiliary proteins. The meat / oil ratio (percentage) for a typical example of pork meat product from entire muscular tissue, without admixture of auxiliary materials, is approx. 95/5.
- the application of vacuum conditions during the production, in order to avoid the presence of oxygen and the creation of air bubbles in the mass of the meat, thus impeded the oxidation of the olive oil and its deterioration, and achieving a good cohesion of the meat mass.
- the cold admixing of olive oil; the temperature of the meat mass at the mixing time of the oil must be at low levels, inferior to 4 °C. At this temperature, the SFI (solid fraction) of the olive oil is relatively closed to that of the saturated animal fat.
- The application of the special technological processes that are characterized by the fact that low temperatures are maintained during all the process phases; the ideal temperature is 4°C.

According to the aforementioned, the present invention provides a method for the production of meat products from entire muscular tissue as defined in independent claim 1. Following the above critical points, smoked or cooked or roasted meat products can be prepared, with or without the use of additives (phosphates, milk proteins, etc) and with direct incorporation of olive oil.
A standard method for the production of meat products from entire muscular tissue according to an embodiment is the following:
Meat consisting of entire muscular tissue, at a temperature of 4 °C, injected with the appropriate brine (water, salt, seasonings, etc) is inserted in a tumbling machine. The tumbling procedure is carried out according to the known methods for the production of ham, under refrigeration and application of vacuum (900 mbar). During the tumbling, the items of meat are compressed and distended by means of the appropriate blades of the tumbling machines. This mechanical strain relaxes the muscle tissue
and destroys the cellular membranes of the muscle fibers; as a result there is better absorption of the components of the brine and of the subsequently added oil. At the end of the tumbling and after the extraction of the meat proteins has been achieved, the olive oil is added. The tumbling continues until the complete incorporation of the olive oil, under refrigeration and vacuum conditions. Subsequently, the meat mass follows the production procedures according to the known technological methods (stuffing in casings, heat treatment, etc) taking special care so that the temperature of the mixture does not exceed to 4 °C prior to the heat treatment.

The meat products with olive oil, which are produced according to the present invention, have an excellent stability from a structure point of view (consistency) due to the creation of an emulsion between olive oil / water and extracted meat proteins. The physical and chemical characteristics of the olive oil are not negatively influenced due to low temperatures and vacuum applied during the production procedure.

## Claims

1. A method of production of meat-based products from entire muscular tissue by cold incorporation of olive oil, **characterized by** the addition of the olive oil after the extraction of the proteins of the meat, which method comprises the following steps :
(a) entire muscular tissue, at low temperature, injected with the appropriate brine comprising water, salt, and/or seasonings, is inserted in a machine and is subjected to tumbling according to the known techniques, maintaining the meat mass at a temperature inferior to 4 °C and under vacuum conditions
(b) at the end of the tumbling, the olive oil is added
(c) the tumbling continues until the complete incorporation of the olive oil
(d) the production procedure continues according to the known techniques such as stuffing in casings, heat treatment, packing, taking special care so that the temperature of the mixture does not rise to 4 °C prior to the heat treatment

## Patentansprüche

1. Verfahren zur Herstellung von Fleischprodukten aus ganzem Muskelgewebe durch kaltes Einarbeiten von Olivenöl, **gekennzeichnet durch** die Zugabe von Olivenöl nach der Extraktion der Fleischproteine, wobei das Verfahren die folgenden Schritte umfasst:
(a) ganzes Muskelgewebe, bei einer tiefen Temperatur, in das eine geeignete Lake, umfassend Wasser, Salz und/oder Gewürze, eingespritzt wurde, wird in eine Maschine eingebracht und einem Tumblen gemäß bekannten Verfahren unterzogen, wobei die Fleischmasse bei einer Temperatur von weniger als 4 °C und unter Vakuumbedingungen gehalten wird,
(b) Olivenöl wird am Ende des Tumblens zugegeben,
(c) das Tumblen wird bis zur vollständigen Einarbeitung des Olivenöls fortgeführt,
(d) das Herstellungsverfahren wird gemäß bekannten Verfahren, wie Abfüllen in Hüllen, Hitzebehandlung, Abpacken, fortgeführt, wobei darauf geachtet wird, dass die Temperatur der Mischung vor der Hitzebehandlung nicht auf 4 °C ansteigt.

## Revendications

1. Procédé de production de produits à base de viande à partir de tissu musculaire entier par incorporation froide d'huile d'olive,
**caractérisé par** l'addition de l'huile d'olive après l'extraction des protéines de la viande, lequel procédé comprend les étapes suivantes :
(a) le tissu musculaire entier, à basse température, injecté avec la saumure appropriée comprenant de l'eau, du sel et/ou des assaisonnements, est inséré dans une machine et est soumis à un barattage selon les techniques connues, maintenant la masse de viande à une température inférieure à 4 °C et dans des conditions de vide
(b) à la fin du barattage, l'huile d'olive est ajoutée
(c) le barattage continue jusqu'à l'incorporation complète de l'huile d'olive
(d) la procédure de production continue selon les techniques connues telles que le remplissage de boyaux, le traitement à la chaleur, l'emballage, en faisant particulièrement attention à ce que la température du mélange ne s'élève pas à 4 °C avant le traitement à la chaleur.
